# EUROPEAN PATENT SPECIFICATION

(11) **EP 0 795 715 B1**
(45) Date of publication and mention of the grant of the patent: **31.05.2000**
(21) Application number: 97108580.8
(22) Date of filing: 03.12.1992
(51) Int. Cl.: F16L 55/165

(54) **Process and material for lining pipes**
Verfahren und Material zum Auskleiden von Rohren
Procédé et matériau pour le revêtement interne de tuyaux

(30) Priority: 04.12.1991 JP 34878591; 04.04.1992 JP 11215192; 22.06.1992 JP 18857192
(43) Date of publication of application: 17.09.1997
(62) Divisional of application: 92311025.8
(73) Proprietor: ASHIMORI INDUSTRY CO., LTD., Osaka-shi, Osaka-fu (JP); ASHIMORI ENGINEERING CO., LTD., Tokyo 103-0022 (JP)
(72) Inventor: Imoto, Takayoshi, Otsu-shi, Shiga-ken, 520-01 (JP); Okahashi, Toshio, Higashiosaka-shi, Osaka-hu, 577 (JP); Seshimo, Masahiro, Nishinomiya-shi, Hyogo-ken, 663 (JP); Makimoto, Hutoshi, Otsu-shi, Shiga-ken, 520-01 (JP); Onishi, Shinji, Miki-shi, Hyogo-ken, 673-05 (JP); Kitagawa, Eiji, Hushimi-ku, Kyoto-shi, Kyoto-hu, 612 (JP)
(74) Representative: Harrison, David Christopher

(56) References cited:
- EP-A- 0 290 184
- EP-A- 0 377 486
- EP-A- 0 454 309
- WO-A-83/03131
- WO-A-85/05431
- GB-A- 2 075 086

## Description

The present invention relates to a lining material for pipe lines, chiefly those buried in the ground, such as sewage pipes, which is capable of forming a rigid inner pipe for repair and/or reinforcement and to a process for providing the pipe line with such rigid inner pipe for repair and/or reinforcement. More particularly, the present invention relates to a lining material for pipe lines already constructed and buried in the ground for the purpose of their repair and/or reinforcement and to a process for providing the pipe lines with a fabric-fiber-reinforced plastic lining, which comprises inserting into the pipe lines a lining material including a sheet impregnated with a thermohardenable resin, which sheet is somewhat overlapped in both lateral end portions slidably to form a tubular sheet, inflating the lining material by introducing a pressurized fluid thereinto and internally heating the lining material to form an integrally solidified rigid inner pipe within the pipe line.

It is well known that pipe lines, irrespective of whether they are constructed on the ground or in the ground, can be lined with a fiber-reinforced plastic material for the purpose of reinforcement and/or repair. In case of pipe lines buried in the ground, they cannot easily be disturbed for lining or inspected for checking their damage. Accordingly, special skills and materials are needed for lining pipe lines buried in the ground, such as gas pipe lines, city water pipe lines and sewage pipe lines. From the past, various lining materials have been proposed for repair and/or reinforcement of such underground pipe lines. In recent years, a tubular mat of a strong fibrous material impregnated with a liquid thermohardenable resin, which is overlapped in both lateral end portions so as to be slidable and interposed between an inner tube and an outer film and is then heated to thicken the resin, has been proposed as a pipe-lining material - see EP-A-454309. This mat itself is called according to ASTM "Sheet Molding Compound" (referred to hereinafter as SMC). This SMC lining material is manufactured, for example, by spreading a strong fibrous material such as glass fiber over a plastic film capable of easily split off, to form a fibrous mat, impregnating the fibrous mat on the film with a thermohardenable resin such as styrene or an unsaturated polyester, overlaying the mat with a tubular film and heating the mat under a controlled condition to thicken the resin by effecting partial polymerization of the resin. In this case, the resin-impregnated mat on the tubular film is overlapped in its both lateral end portions so as to be slidable in both directions to form a tubular mat. The two films on both sides of the resin-impregnated mat serves to prevent evaporation of the thermohardenable resin in the mat but the outer film is split off prior to being inserted into pipe lines.

This lining material containing SMC as main component affords, after curing, a rigid fiber-reinforced plastic (FRP) lining on the inner surface of pipe lines thereby attaining the purpose of reinforcement and/or repair of the pipe lines. However, this lining material has the drawback that when it is inserted into pipe lines, especially long or curved ones, an extremely strong force is exerted on the SMC due to frictional resistance against the inner surface of the pipe lines so that the SMC is locally stretched to reduce its thickness,or suffers from various damages, and in the extreme case, breaks down in the damaged areas. As the SMC lining material has a number of disadvantages to be overcome in addition to the above mentioned, a new type-lining material was proposed in JP-A-2-95880 (EP-A-0454309) (referred to hereinafter as Ref. 1). Disclosed in Ref. 1 is a newest lining material now currently used which comprises in place of the mat of SMC a sheet comprised of a fabric and a mat of fibers of high tenacity impregnated with a thickened liquid thermohardenable resin to form a fabric-fiber-reinforced composite molding sheet (referred to hereinafter simply as FCM-sheet). This FCM-sheet is also coated on both sides with two plastic films, one of which constitutes an outermost layer capable of easily split off before insertion of the lining material into pipe lines. Stretchability of SMC by strong tension, that is one of the great disadvantages of SMC, is overcome to a certain degree by FCM-sheet since a fabric in addition to fibers is impregnated with a thermohardenable resin in case of FCM-sheet unlike SMC wherein fibers alone are impregnated with the resin so that the resultant sheet is resistant to biaxial tension. However, both SMC and FCM-sheet lining materials are common in appearance since they may be made up by overlapping both lateral end portions of the sheet material with each other to form a tubular material in such manner that the overlapped portions of the tubular material is somewhat slidable in circumferentially opposite direction in compliance with the diameter of the pipe lines. In order to facilitate insertion of the lining material into a pipe line, the diameter of the tubular sheet the lateral end portions of which are overlapped with each other is normally smaller than the inner diameter of the pipe line. However, the lining material once inserted into the pipe line is inflated to bring it into contact with the pipe line prior to curing.

An underground sewage pipe line is usually made of a porcelain pipe or a Hume concrete pipe and thus is brittle and easily broken by earthquake or by vibration from adjacent underground work. Otherwise, sewage pipe lines, if superannuated, become so brittle that they often undergo local break or rupture or are damaged to be ready to fall to pieces. When such brittle sewage pipe lines are lined with either of the SMC or FCM-sheet lining material for reinforcement, the lining material in the form of a tube formed by overlapping both lateral end portions of the sheet so as to be slidable in circumferential direction is inserted into such pipe lines and the tubular lining material is then inflated internally by fluid pressure whereby the overlapped lateral end portions slide to comply with the inner diameter, i.e. the inner circumferential length of the pipe lines. If the pipe lines have a locally broken portion, the lining materialmay be expanded out of the broken portion by internal pressure whereby the overlapped lateral end portions of the lining material are excessively slid to form a cleavage. If the pipe lines are worn out entirely, they may be ruptured over a significant length because they are pressed internally by the expanding lining material and fall to pieces locally. In this case, sliding of the overlapped lateral end portions of the lining material goes too far so that the opening may be formed between the lateral end portions of the lining material over a significant length. Although FCM-sheet can suppress stretchability of SMC by tension, this phenomenon commonly occurs irrespective of whether the lining material is SMC or FCM-sheet-as both materials wherein the lateral end portions are weakly bonded merely by the thickened liquid resin are less resistant to internal expansion by fluid pressure.

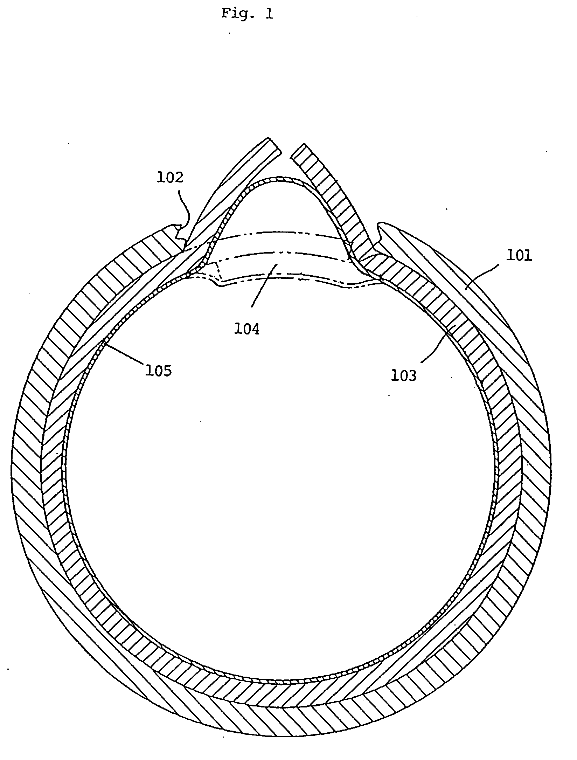

This drawback in case of using the SMC or FCM-sheet lining material can be exaggeratedly shown in the accompanying Fig. 1 wherein a lining material is inserted into a pipe line, especially a sewage pipe, having a broken portion and is inflated internally by fluid pressure. A pipe line 101 has a broken portion 102 where the lining material 103 made of SMC or FCM-sheet is spread out by fluid pressure. For exaggeration's sake, the overlapped lateral end portions 104 of the lining material is just located in the broken portion of the pipe line so that the overlapped lateral end portions which are weakly bonded by the aid of a thickened thermohardenable resin contained in the lining material are opened by the internally exerted fluid pressure. In this case, the inner tubular plastic film 105 also spread out of the broken portion 102 of -the pipe line is still remaining in Fig. 1, but this tubular film 105 is locally expanded seriously and finally ruptured by the fluid pressure to permit spout of the fluid. Even if the overlapped lateral portions 104 of the lining material 103 is not located in the broken portion 102 of the pipe line 101, the lining material 103 in the broken portion 102 is expanded while permitting separation of the lateral end portions of the lining material within the pipe line 101. The remaining tubular film 105 no longer functions as a reinforcing material for the pipe line 101.

Furthermore, it is noteworthy that the pipe line is sometimes surrounded by high pressure underground water. If the pipe line has a broken portion, a large amount of water intrudes into the pipe line through the broken portion thereof so that the pipe line is flooded with water throughout. In case a lining material is applied onto the inner surface of such pipe line, the lining material is externally wetted with water so that the lining material cannot be thermocured or at least needs a long period of time for curing, even if it is internally heated.

The FCM-sheet lining material disclosed in Ref. 1 is certainly superior in mechanical strength to the SMC lining material but the former is still unsatisfactory in mechanical properties for applying it onto pipe lines. The SMC sheet in FCM-sheet is poor in strength and elongation at the time of break-down while the fabric sheet in FCM-sheet is great in strength and elongation at the time of break-down. Thus, the SMC sheet is broken down by a weaker force as compared with the fabric sheet. In case of FCM-sheet usually employed as a lining material and comprised of a SMC sheet of 4.0 mm in thickness and a fabric sheet of 0.3 mm in thickness, for example, these sheets showed the following properties: a strength at break-down of 8437 N/M and an elongation at the time of break-down of 1.8% for the SMC sheet, and a strength at the time of break-down of 53563 N/m and an elongation at the time of break-down of 24% for the fabric sheet. When tensile force is exerted to the SMC sheet, the force is concentrated to a relatively weak portion to incur local elongation and break-down. On the other hand, the fabric sheet shows a great elongation at the initial stage of applying tensile force due to stretching of the relaxed yarns in the fabric structure, but its resistance to tensile force is rapidly increased after allowing the yarns to stretch to a certain degree. If the SMC sheet is integrally combined with the fabric sheet as in FCM-sheet the force locally exerted to the SMC sheet is dispersed so that the strength and elongation at the time of break-down is somewhat improved. In case tensile force is increased beyond a certain limit, however, the SMC sheet alone in FCM-sheet is broken down. In the above example, the strength of the SMC sheet at the time of break-down was 11183 N/m and its elongation was 2.4%. Accordingly, if a strong tensile force beyond a certain limit is exerted at the time of inserting the FCM-sheet lining material into pipe lines, the SMC sheet layer alone is broken, thus leading the lining treatment to failure. More specifically, the FCM-sheet lining material used for a conventional sewage pipe of 300 mm in diameter has a width of about 1000 mm and the strength of the SMC sheet layer thereof at the time of break-down is 11183 N. This apparently means that if a load of at least 9810 N is applied at the time of inserting the lining material into the pipe, there may be a possibility of the SMC sheet layer being broken down. In general, the load at the time of inserting a lining material into a pipe line depends on the length of the pipe line. Thus, a significant load is applied to a lining material In the event the lining material ls long and the pipe line is also long. If the length of a pipe line exceeds 80 meters, the maximum load applied to a lining material being inserted into the pipe line will sometimes exceed 9810 N. Further, when the pipe lines is seriously damaged or is irregular in size or is curved, the load will readily exceeds 9810 N even if the length of the pipe line is far less than 80 meters.

In general, a sewage pipe line is constructed by connecting a great number of Hume concrete pipes in serial. If such Hume concrete pipes are broken locally, only damaged portions are repaired by replacing the damaged pipe with a new Hume concrete pipe. It is very common in this case that the pipe where the broken portion is formed is cut in two positions so as to remove only the broken portion and the pipes thus cut away are interconnected with a repair pipe which has an outer diameter equal to the inner diameter of the cut pipes. If such sewage pipe line has been repaired several times, therefore, the inner diameter of the pipe line varies according to the repaired positions. Accordingly, if the pipe line once repaired is again to be repaired, the second repair pipe is smaller in inner diameter than the first repair pipe. Thus, the pipe line is constructed as a whole by pipes with different diameters. If this pipe line is lined with a tubular lining material with a definite diameter, the lining material tends to form a wrinkle in the location of repair in several times where the diameter of the pipe line is considerably smaller.

Under the above circumstances, there is a technical subject for improving a means for applying a lining material to pipe lines in a simple and economical manner and also a great demand for developing a new type lining material which can be inserted into a pipe line having damaged portions without difficulty and is capable of forming a rigid fabric-fiber-reinforced plastic (FRP) lining on the inner surface of such pipe line.

Accordingly, it is an object of the present invention to provide a new lining material which can be applied onto the inner surface of a pipe line system varying in diameter and having damaged portions to form a rigid fabric-fiber-reinforced plastic lining.

It is another object of the present invention to provide a lining material capable of being inserted into a pipe line system varying in diameter and having damaged portions and capable of being thermocured to form a rigid fabric-fiber-reinforced plastic lining even if underground water is intruded into the pipe line.

It is still another object of the present invention to provide a lining material capable of being inserted into a pipe line system varying in diameter without causing any break-down of the resin-impregnated sheet under strong tensile force and capable of forming a rigid fabric-fiber-reinforced plastic lining.

It is further object of the present invention to provide a process for providing a pipe line system varying in diameter and having damaged portions with a lining material capable of forming a rigid fabric-fiber-reinforced plastic lining wherein the lining material is applied onto the inner surface of the pipe line and then the resin-impregnated sheet is thermocured.

It is yet further object of the present invention to provide a process for providing a pipe line system varying in diameter, especially a sewage pipe line with a lining material capable of forming a rigid fabric-fiber-reinforced plastic lining wherein the lining material is applied onto the inner surface of the pipe line varying in diameter without formation of any wrinkle.

Other objects, features and advantages of the present invention will become apparent more fully from the following description.

In accordance with the present invention, there is provided a lining material for a pipe fine system comprising pipe lines of different diameters arranged in series, the lining material comprising
(a) a flexible tubular film, the tubular film being expansible up to a circumferential length corresponding to that of the maximum inner diameter portion of the pipe line system, the tubular film being folded several times at a fold such that the width of the folded film is within a width equal to or somewhat smaller than the minimum inner diameter of the pipe line system, and
(b) a resin-impregnated sheet covering the outer surface of the tubular film, the sheet including a mat of fibres of a high tenacity and a fabric impregnated with a thickened liquid thermohardenable resin to form a fabric-fibre-reinforced composite as an intermediate layer which has a circumferential length somewhat larger than that of the maximum diameter portion of the pipe line system and which covers the outer surface of the flexible tubular film, both edge portions of the sheet being overlapped slidably over each other and
(c) on the outer surface of the sheet and over its full length a tubular covering material having at a maximum circumferential length an inner circumference less than the circumferential length of the sheet, the material being water resistant and having a strong resistance to tensile force, the strong resistance to tensile force being exerted by the material when the lining material is inflated in the pipe line system so that the circumferential length of the lining material being equal to or somewhat smaller than that of the portion of the pipe line system of minimum diameter.

In the lining material of this invention, it is preferable that the fabric is positioned in the fabric-fiber-reinforced composite molding sheet near to the outermost surface. It is also preferable in the lining material that the flexible tubular film positioned in the innermost portion is elastic and air-tight and can be expansively inflated by inner pressure exerted by a pressurized fluid.

In accordance with a variant of the above embodiment, there is provided a lining material wherein the tubular covering material is a fabric-like material coated on at least outer surface thereof with a water-proof film.

In accordance with the present invention, there is provided a process for providing pipe line systems comprising a series of plural pipes having different diameters with a fabric-fiber-reinforced lining, which includes the steps of selecting a lining material as described above with a tubular covering material (4) and sheet appropriate to the circumferential lengths of the pipe line system; placing the lining material in the system and introducing a pressurized fluid thereinto whereby the overlapped portions of the sheet are slid, and thereafter heating the lining material to cure the thermohardenable resin in the sheet to form an integrally bonded fabric-fiber-reinforced plastic lining on the inner surface of the pipe lines.

As is disclosed in our copending Japanese application 4-38548 (EP-A-0 553 558 published 04/08/92) heating of the lining material to cure the thermohardenable resin may be carried out by allowing a steam nozzle for jetting superheated steam to move from one end to the other end of the pipe line or by firstly introducing a heating fluid into the lining material for preheating and then allowing a steam nozzle for jetting superheated steam to move from one end to the other end of the pipe line.

In the plastic lining formed on the inner surface of the pipe line, the flexible tubular film exists in the innermost position of the lining. After completion of the pipe-lining treatment, the flexible tubular film may be removed by drawing a turning belt previously attached to one terminal end of the lining material in the direction of the other terminal while everting the film. A fabric layer is overlaid with a mat of glass fibers and the fabric layer and the mat are together impregnated with the resin and affords, after heating, an FRP having an integrally combined fabric layer on one side.

In the present invention, it is preferred that the liquid thermohardenable resin comprises an unsaturated polyester resin or an epoxy acrylate resin each having a maximum exothermic temperature according to JIS K-6901 of at least 200°C. It is also preferable that such liquid thermohardenable resin contains styrene-butadiene-styrene block copolymer, polystyrene, polyethylene, methyl polymethacrylate, polyvinyl acetate, saturated polyester, urethane-modified saturated polyester and/or polycaprolactone as a low shrinkage additive, barium sulfate, talc, aluminum hydroxide and/or glass powder as a filler, magnesium oxide and/or magnesium hydroxide as a thickening agent, and an organic peroxide having a decomposition temperature of 60-90°C for rendering the half-life for 10 hours as a curing catalyst.

In case the FCM-sheet is used, it is preferably provided on the innermost surface thereof with a non-woven fabric layer whereby the non-woven fabric layer integrally combined with the resin in the resultant lining will enhance abrasion-resistance against any solid particles contained in sewage.

Examples of the fluid to be introduced into the pipe line under pressure for inflating the lining material include air, nitrogen, water etc. The use of water is not preferred since it gives bad effect for curing of the resin by heating. Most preferably is the use of compressed air.

The present invention can more fully be understood from the following description taken in conjunction with the accompanying drawings in which:
Fig. 1 is a cross sectional view exaggeratedly showing the state of a conventional lining material applied onto the inner surface of a pipe line having a broken portion;
Fig. 2 is a cross sectional view showing the state of an example of lining material inserted into a pipe line having a broken portion;
Fig. 3 is a cross sectional view showing the state of a lining material onto the inner surface of a pipe line having a broken portion;
Fig. 4 is a perspective view of lining material showing the state of being overlapped in lateral and lengthwise end portions;
Fig. 5 is a cross sectional view showing the state of simply inflating the lining material shown in Fig. 4 without a pipe line, merely for the purpose of showing the structure of the lining material;
Fig. 6 is a partially enlarged cross sectional view showing the structure of the overlapped end portions of lining material;
Fig. 7 is a diametrical section through a multi-diameter pipe system;
Fig. 8 is a cross sectional view showing the lining material embodying this invention folded in flattened state;
Fig. 9 is a diametrical cross section of part of the system on a larger scale, and showing lining material according to the present invention in position; and
Fig. 10 shows in cross section the embodiment of Figure 7 installed in (a) a first pipe (b) a second pipe of the f \ pipe system.

Throughout these drawings, the same reference numerals having the same meanings unless otherwise specifically indicated.

In Fig. 1, the drawbacks of the conventional lining material in case of being applied onto the inner surface of a pipe line having broken portions has already been explained.

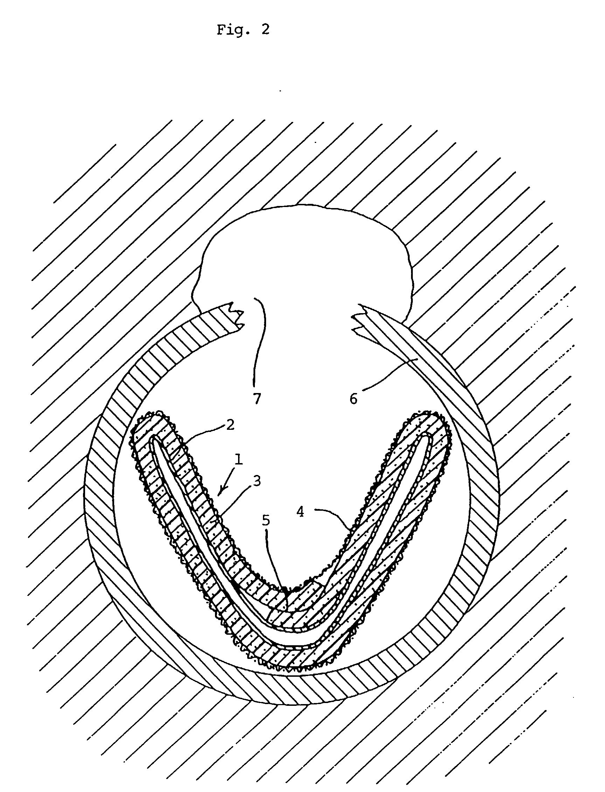

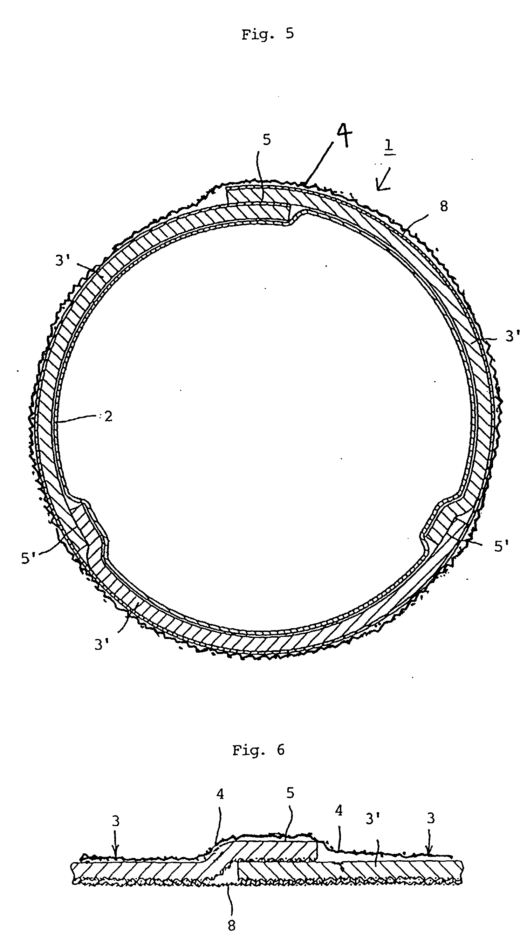

In Fig. 2 showing the lining material in the state of being inserted in a broken pipe line, a lining material 1 comprises a flexible tubular film 2 overlaid on the outer surface thereof with a fabric-fiber-reinforced composite molding sheet 3 which is overlaid on the outer surface thereof with a tubular covering material 4. The sheet 3 has been impregnated previously with a thickened liquid thermohardenable resin and is normally prepared by impregnating the sheet 3 with a liquid thermohardenable resin and heating the sheet at a controlled temperature to effect partial polymerization of the resin. The flexible tubular film 2 is made of an elastic synthetic resin and is capable of being expansively inflated by inner pressure. Over the full length, the sheet 3 is overlapped in both lateral end portions to a certain width to form an overlapped portion 5 where the both lateral end portions are attached each other to a certain width by the aid of the thickened thermohardenable resin and are slidable in opposite directions in compliance with the inner circumferential length of a pipe line to be treated. The sheet 3 is overlaid on the outer surface with the tubular covering material 4 which is a fabric-like or net-like tubular material and is flexible and somewhat expansive by inner pressure. In case the tubular covering material 4 is a fabric-like tubular material, it may be coated at least outer surface thereof with a water-proof film to render the material water-resistant. The lining material 1 thus constructed is then inserted into a pipe line 6 having a broken portion 7 according to a conventional manner, for example, a method using a drawing belt as shown in Fig. 5 of Ref. 1. In this case, the lining material 1 is introduced in laterally bent state, forming "U" or "V" shape in cross section while being kept in flattened state, just shown in Fig. 2.

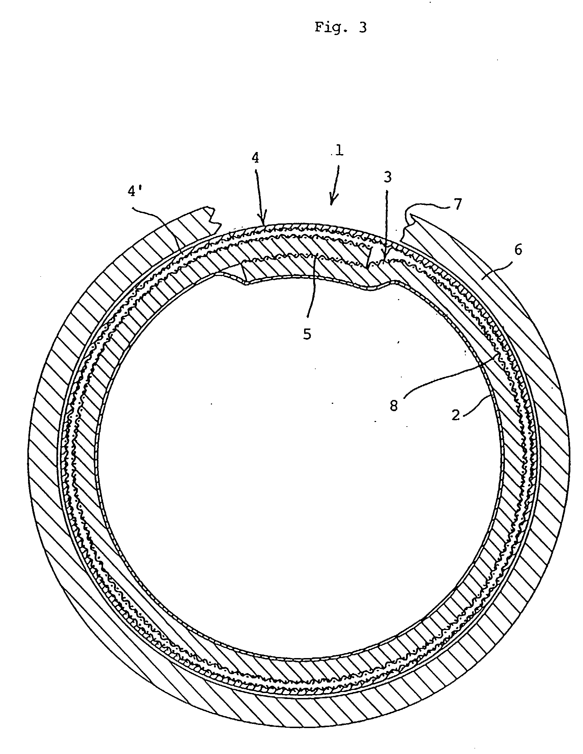

In Fig. 3 showing the state of the lining material 1 being inflated in the pipe line 6 having the broken portion 7, the lining material 1 inserted in flattened state into the pipe line 6 is inflated by pressurized fluid such as compressed air. In this case, the tubular covering material 4 constituting the outermost layer of the lining material exhibits strong resistance to tensile force exerted at the time of inflation and serves to prevent outward expansion of the lining material 1 beyond the broken portion 7 of the pipe line 6 as shown in Fig. 1. In the lining material 1 in inflated state, the sheet 3 expands in such manner that the both lateral end portions in the overlapped portion 5 are allowed to slide in opposite directions so that its outer circumferential length become equal to that of the inner surface of the pipe line 6. The flexible tubular film 2 and the tubular covering material 4 are inherently flexible and elastic so that they expands readily in accordance with expansion of the sheet 3. The tubular covering material 4 as the outermost layer of the lining material 1 can be provided on the sheet 3 by wrapping the sheet 3 which has been overlapped in both lateral end portions with the material 4 and stitching both ends of the material 4 with a yarn or the like. The lining material 1 thus laminated is preferably wrapped with a plastic film for preventing any evaporation of the liquid thermohardenable resin such as styrene in the sheet 3. This mode is particularly desirable when the material 4 is a net-like material. Such plastic film can be split off just before introducing the lining material 1 into the pipe line 6.

When the pipe line is surrounded with high pressure underground water, such water intrudes together with soil and sand into the pipe line through the broken portion 7 whereby the pipe line is wholly or partially filled with water to make thermocuring of the resin impossible or too much delayed. In an Example shown in Fig. 3, a FCM-sheet having a fabric layer 8 on the outermost layer thereof is used for the sheet 3 and a flexible fabric-like material coated on at least outer surface thereof with a water-proof film 4' is used to make the lining material water-resistant. Accordingly, no problem arises in the lining material shown in Fig. 2 with respect to the nature of ground. Thus, the lining material 1 has a water-proof film on the outermost layer, and so the use of a plastic film for preventing evaporation of a liquid thermocurable resin may be omitted in this case without any trouble.

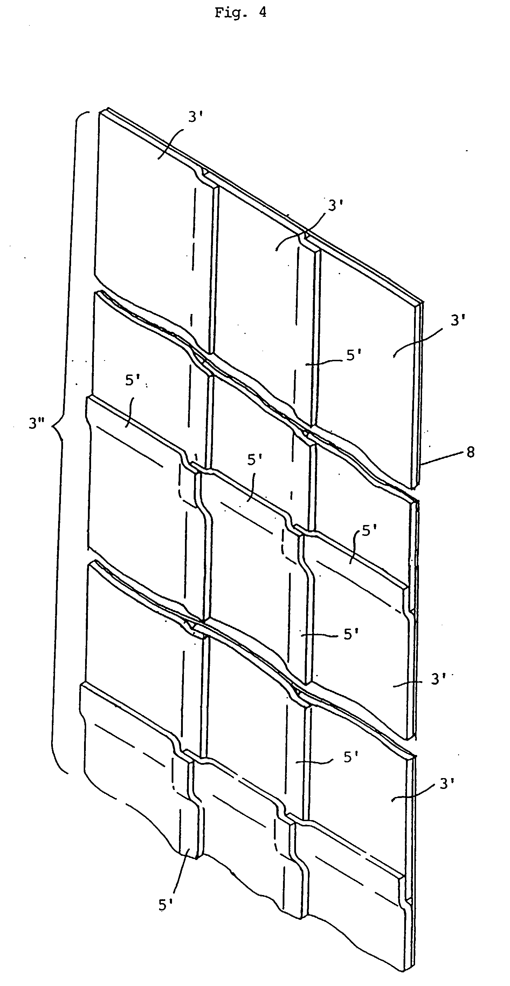

In Fig. 4 showing another example of the lining material, a fabric layer 8 is fully coated with the fabric-fiber-reinforced composite molding sheet composed of a plurality of separated sheet fractions 3' arranged in lengthwise and/or lateral direction in such manner that the lengthwise and/or lateral end portions of the individual separate sheet fractions 3' are overlapped so as to be slidable each other to form a composite sheet material 3" as a whole. In this case, each of the sheet fractions 3' is same in construction as the sheet 3 as in the case of Figs. 2-3, but is only different in size. In other words, the sheet material 3" corresponding to the sheet 3 is composed of several units of the sheet fractions 3'. Accordingly, the individual sheet fraction 3' may be manufactured by simply cutting the sheet 3 in square. Both lateral end portions of the composite sheet material 3" is so overlapped, as in the case of the sheet 3 in Fig. 2 or 3, that the composite sheet material 3" may become tubular and the fabric layer 8 may constitute the outer layer of the sheet material. It follows that if SMC is used as the individual sheet fractions 3', the composite sheet material 3" as a whole will become the fabric-fiber-reinforced composite molding sheet, i. e. the FCM-sheet. As in the case of the lining material shown in Figs. 2-3, the composite sheet material 3" is provided on the inner surface thereof with the flexible tubular film 2.

The length of the individual sheet fractions 3' in lengthwise direction is preferably 30 meters or less although it varies according to the maximum load applied to the lining material in case of inserting it into a pipe line. If the length of the individual sheet 3' exceeds 30 meters, the composite sheet material may be broken down at any of the overlapped portion 5' when a strong tensile force is exerted to the sheet material because the fraction between the fabric layer 8 and the sheet fractions 3' is so great that the individual sheet fractions 3' cannot be slid in the overlapped portion 5'. The composite sheet material may be furnished with a higher resistance to tensile force by shortening the length of the individual sheet fractions 3'. If a plurality of the sheet fractions are arranged in lateral direction, 2-5 sheet fractions are generally arranged although the number may be varied according to the diameter of the pipe line to be treated and the expected size of broken portions in the pipe line. In case a pipe line has a significantly large diameter, however, it is not desirable to make the width of the individual sheet fractions 3' excessively large.

In this case, the width of the individual sheet fractions is preferably limited to not more than 1 meter although the number of the fractions exceeds 5.

In Fig. 5 showing the cross section of the inflated lining material 1 shown in Fig. 4, the lining material 1 has small overlapped portions 5' (two overlapped portions 5' in the drawing) and one overlapped portion 5 for the composite sheet material 3". In this example, the lining material 1 has a sandwich structure wherein the sheet 3 is interposed between the flexible tubular film 2 and the fabric layer 8. In general, the width of the overlapped portion 5' of the sheet fraction 3' in lateral direction is within the range of 10-30 cm while that in lengthwise direction is within the range of 20-100 cm. In case of the composite sheet material 3" or the sheet 3, the width of the lining material 1 in the overlapped portion 5 is generally somewhat larger than the above case and is within the range of 10-50 cm although the width may be varied according to the inner diameter of a pipe line to be treated.

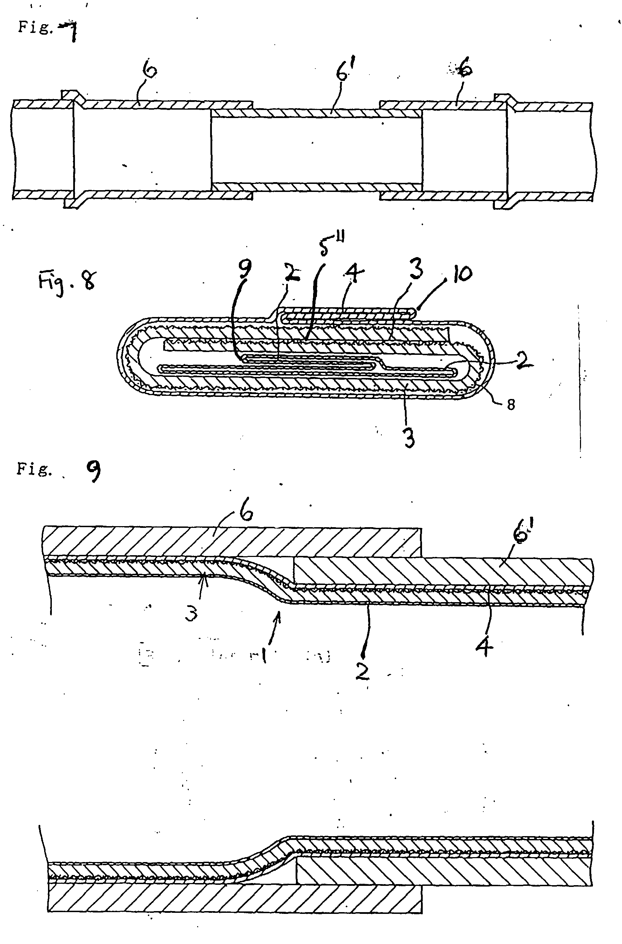

In Fig. 6 showing the overlapped portion of the lining material 1, it is derived from FCM-sheet which has inherently a fabric layer 8. Accordingly, the lining material 1 has the fabric layer 8 in duplicate in the drawing and the use of the lining material in this mode is preferable. The fabric layer 8 in the FCM-sheet may be arranged so that the fabric layer 8 may be on the opposite side from that of the fabric layer 8 used for the sheet fractions. According to the conditions of the pipe line to be treated, the individual sheet fractions 3' may be wider in lateral direction but shorter in lengthwise direction or vice versa.

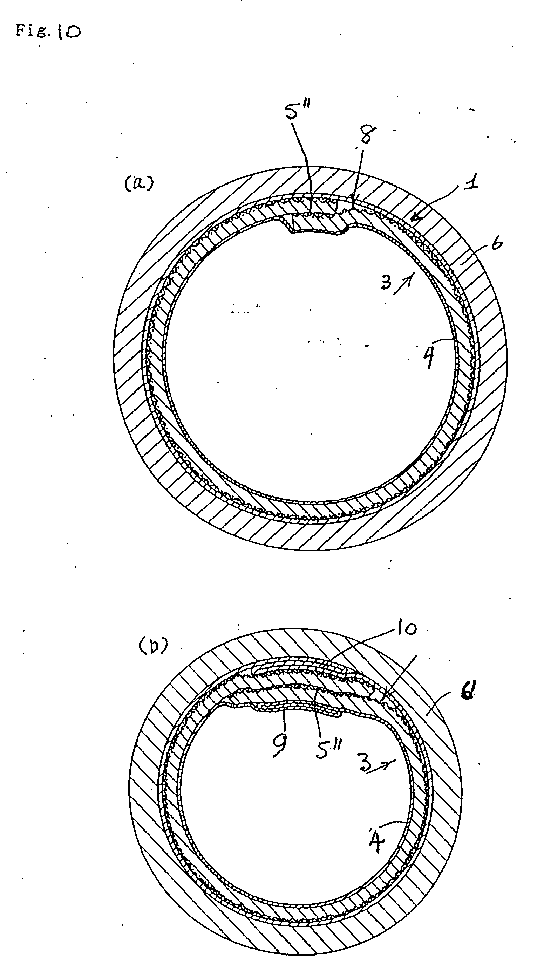

Fig. 7 shows a cross sectional view of a pipeline system of two diameters, as exhibited by pipes 6 and 6'. To allow for this variation the lining material of this invention, seen in Figure 8, is composed of (a) a flexible tubular film 2 which is expansive up to the circumferential length corresponding to the maximum inner diameter of a pipe line system comprising plural pipe lines of different diameters and is folded at a folding point 9 where the width of the film (2) is within the width equal to or somewhat smaller than the minimum inner diameter of the pipe line system and (b) a mat of fibers of a high tenacity and a fabric layer integrally impregnated with a thickened liquid thermohardenable resin to form a fabric-fiber-reinforced composite molding sheet 3 which has a circumferential length somewhat larger than the inner circumferential length corresponding to the pipe line system having the maximum diameter and covers the outer surface of the flexible tubular film 2. Both lateral end portions of the sheet 3 are overlapped with each other slidably in an overlapped portion 5 and the circumferential length of the lining material 1 is equal to or somewhat smaller than the inner circumferential length of the pipe line system having the minimum diameter.

In this lining material 1, the flexible tubular film 2 constituting the innermost layer has a diameter corresponding to the pipe line having the maximum inner diameter among the pipe line system. This means that the circumferential length of the film 2 is almost equal to the circumferential length of the pipe line having the maximum diameter and that the film 2 is applicable to the pipe line of such diameter. Simultaneously, the film 2 folded several times in flattened state at the folding point 9 must have a width equal to or somewhat smaller than the width of the pipe line having the minimum diameter. This means that the film 2 can be inserted into the narrowest portion of the pipe line system. Likewise, the sheet 3 is somewhat larger in circumferential length than the pipe 6 having the larger diameter. As the sheet 3 is rather thick and so cannot be folded many times, it is overlapped in both lateral end portions in the overlapped portions 5" over a relatively longer distance so as to be slidable each other in opposite directions. The tubular covering material 4 forming the outermost layer may be water-resistant as in the lining material shown in Figs. 2 and 3 and may be folded several times in flattened state at the folding point 10 outwardly to reduce its circumferential length and diameter so that its outer circumferential length is smaller in folded state than the inner circumferential length of the pipe line having the least diameter, thus enabling insertion of the lining material 1 into the narrowest pipe 6' in the pipe line system.

As seen in Figure 9, the material can bridge over the transitions in diameter between pipes 6 and 6'. Figure 10(a) shows how the material fits into a pipe 6 of its design diameter, while Figure 10(b) shows how in a pipe such as 6', the folds 9 and 10 may remain partially in position without detriment to the operation of the material.

According to the process of this invention, the lining material is inserted into a pipe line and inflated therein by the aid of a pressurized fluid in a conventional manner. As the lining material of this invention is overlapped in both lateral end portions slidably to reduce its circumferential length, the overlapped portions are allowed to slide in opposite directions at the time of inflation to increase its circumferential length whereby the lining material is brought into contact closely with the inner surface of the pipe line.

The lining material thus arranged in the pipe line is then heated to cure the thermohardenable resin as binder. By properly selecting the kind of resins, curing of the resin can be made, for example, by irradiation of ultraviolet rays. In the majority of cases, however, curing of the resin is carried out by heating. According to the process of Japanese application 4-38548 (EP ) the lining material can be heated above 100°C without application of high pressure for curing the thermohardenable resin rapidly.

It is also a merit of this invention that if the covering material is water-proof, intrusion of high pressure underground water through damaged portion of pipe lines can effectively be presented as shown in Fig. 3. It is known that water intruded into the lining material gives bad effect on the curing of the thermohardenable resin contained therein. According to the present invention, thermocuring of the resin can be carried out rapidly without trouble since the sheet containing the resin is separated from the covering material and thermally shielded.

It is further merit of the present invention, the lining material can be inserted into pipe lines by relatively weak tensile force, especially in the embodiment shown in Fig. 4. This is due to the reason that strong tensile force is absorbed in a number of overlapped portions of the sheet fractions existing in lateral direction. Thus, the lining material is not broken down even in the event a strong tensile force is exerted thereto.

It is still another merit of the present invention that the lining material designed as shown in Fig 7 can be inserted smoothly into a pipe line system comprised of plural pipes arranged in serial having different diameters. In case the inner circumferential length of the pipe line is maximum, for example, the sheet overlapped in both lateral portions over a certain length will be slid each other in opposite directions to increase the circumferential length of the lining material. On the other hand, when the inner circumferential length of the pipe line is small, the sheet will be slid a little and the tubular film will not be increased in its circumferential length only by slightly extending of the film from its folding point.

As has been described hitherto, the technical effects and advantages achieved by the lining material and the process of this invention are outstanding and so it is obvious that the lining material of this invention is particularly suitable for the repair and/or reinforcement of sewage pipe lines.

## Claims

1. A lining material for a pipe line system comprising pipe lines of different diameters arranged in series, the lining material comprising
(a) a flexible tubular film (2) the tubular film (2) being expansible up to a circumferential length corresponding to that of the maximum inner diameter portion of the pipe line system, the tubular film (2) being folded several times at a fold (9) such that the width of the folded film is within a width equal to or somewhat smaller than the minimum inner diameter of the pipe line system, and
(b) a resin-impregnated sheet (3) covering the outer surface of the tubular film (2), the sheet including a mat of fibres of a high tenacity and a fabric impregnated with a thickened liquid thermohardenable resin to form a fabric-fibre-reinforced composite as an intermediate layer which has a circumferential length somewhat larger than that of the maximum diameter portion of the pipe line system and which covers the outer surface of the flexible tubular film, lateral edge portions (5) of the sheet (3) being overlapped slidably over each other and
(c) on the outer surface of the sheet (3) and over its full length a tubular covering material (4) having at a maximum circumferential length an inner circumference less than the circumferential length of the sheet (3), the material (4) being water resistant and having a strong resistance to tensile force, the strong resistance to tensile force being exerted by the material (4) when the lining material is inflated in the pipe line system so that the circumferential length of the lining material is equal to or somewhat smaller than that of the portion of the pipe line system of minimum diameter.

2. A lining material according to claim 1, wherein the tubular covering material (4) is selected from fabric-like and net-like tubular materials.

3. A lining material according to claim 1 or claim 2 wherein the tubular covering (4) material is a fabric-like material coated on at least outer surface thereof with a water-proof film.

4. A process for providing a pipe line system with a fabric-fibre-reinforced lining which includes the steps of selecting a lining material of any one of claims 1 to 3 with a tubular covering material (4) and sheet (3) appropriate to the circumferential lengths of said pipe line system; placing the lining material in the system and introducing a pressurized fluid thereinto whereby the overlapped portions (5) of the sheet (3) are slid while retaining a tubular form of the sheet; and thereafter heating the lining material to cure the thermal hardenable resin into the sheet to form an integrally bonded fabric fibre reinforced plastic lining on the inner surface of the pipe line system.

## Patentansprüche

1. Auskleidungsmaterial für ein Rohrleitungssystem, das Rohrleitungen mit unterschiedlichen Durchmessern umfasst, die in Serie angeordnet sind, wobei das Auskleidungsmaterial umfasst:
(a) einen flexiblen schlauchartigen Film (2), wobei der schlauchartige Film (2) bis zu einer Umfangslänge ausdehnbar ist, die jener des Abschnitts mit maximalem Durchmesser des Rohrleitungssystems entspricht, wobei der schlauchartige Film (2) an einer Falte (9) mehrmals gefaltet ist, so dass die Breite des gefalteten Films innerhalb einer Breite liegt, die gleich groß wie oder etwas kleiner als der minimale Innendurchmesser des Rohrleitungssystems ist, und
(b) eine harzimprägnierte Bahn (3), die die Außenfläche des schlauchartigen Films (2) bedeckt, wobei die Bahn eine Matte aus Fasern mit hoher Festigkeit sowie ein Gewebe umfasst, das mit einem eingedickten flüssigen wärmehärtbaren Harz imprägniert ist, um einen fasergewebeverstärkten Verbundstoff als Zwischenschicht zu bilden, deren Umfangslänge etwa größer ist als jene des Abschnitts mit maximalem Durchmesser des Rohrleitungssystems, und die die Außenfläche des flexiblen schlauchartigen Films bedeckt, wobei seitliche Randabschnitte (5) der Bahn (3) gleitbar übereinandergelegt sind, sowie
(c) an der Außenfläche der Bahn (3) und über ihre gesamte Länge ein schlauchartiges Deckmaterial (4), das an einer maximalen Umfangslänge einen Innenumfang aufweist, der geringer ist als die Umfangslänge der Bahn (3), wobei das Material (4) wasserbeständig ist und eine starke Widerstandsfähigkeit gegen Zugkraft aufweist, wobei die starke Widerstandsfähigkeit gegen Zugkraft vom Material (4) ausgeübt wird, wenn das Auskleidungsmaterial im Rohrleitungssystem aufgeblasen ist, so dass die Umfangslänge des Auskleidungsmaterials gleich groß wie oder etwas kleiner als jene des Abschnitts des Rohrleitungssystem mit minimalem Durchmesser ist.

2. Auskleidungsmaterial nach Anspruch 1, worin das schlauchartige Deckmaterial (4) aus gewebeartigen und netzartigen schlauchartigen Materialien ausgewählt ist.

3. Auskleidungsmaterial nach Anspruch 1 oder 2, worin das schlauchartige Deckmaterial (4) ein gewebeartiges Material ist, das zumindest an seiner Außenfläche mit einem wasserdichten Film beschichtet ist.

4. Verfahren zum Bereitstellen eines Rohrleitungssystems mit einer gewebefaserverstärkten Auskleidung, das folgende Schritte umfasst: das Auswählen eines Auskleidungsmaterial nach einem der Ansprüche 1 bis 3 mit einem schlauchartigen Deckmaterial (4) und einer Bahn (3), wie für die Umfangslängen des Rohrleitungssystems angemessen; das Anordnen des Auskleidungsmaterials im System und das Einbringen eines Druckfluids darin, wodurch die überlappten Abschnitte (5) der Bahn (3) zum gleiten gebracht werden, während eine schlauchartige Gestalt der Bahn beibehalten wird; und daraufhin das Erwärmen des Auskleidungsmaterials, um das wärmehärtbare Harz in der Bahn zu härten, um an der Innenfläche des Rohrleitungssystems eine einstückig verklebte gewebefaserverstärkte Kunststoffauskleidung auszubilden.

## Revendications

1. Matériau de revêtement pour un système de canalisations comprenant des canalisations de diamètres différents disposées en série, le matériau de revêtement comprenant
(a) un film tubulaire flexible (2), le film tubulaire (2) étant expansible jusqu'à une longueur circonférentielle correspondant à celle de la portion du diamètre interne maximum du système de canalisations, le film tubulaire (2) étant plié plusieurs fois à un pli (9) de telle sorte que la largeur du film plié se situe dans une largeur égale à ou légèrement plus petite que le diamètre interne minimum du système de canalisations et
(b) une feuille imprégnée de résine (3) couvrant la surface extérieure du film tubulaire (2), la feuille incluant un tapis de fibres d'une forte ténacité et une étoffe imprégnée avec une résine liquide épaissie thermodurcissable pour former un composite renforcé par des fibres d'étoffe en tant que couche intermédiaire, qui a une longueur circonférentielle légèrement plus grande que celle de la portion de diamètre maximum du système de canalisations, et qui couvre la surface extérieure du film tubulaire flexible, les portions de bord latérales (5) de la feuille (3) se chevauchant d'une manière coulissante entre elles et
(c) sur la surface extérieure de la feuille (3) et sur toute sa longueur, un matériau de recouvrement tubulaire (4) ayant à une longueur circonférentielle maximale une circonférence intérieure inférieure à la longueur circonférentielle de la feuille (3), le matériau (4) étant résistant à l'eau et ayant une forte résistance à des forces de traction, la forte résistance à des forces de traction étant exercée par le matériau (4) lorsque le matériau de revêtement est gonflé dans le système de canalisations de telle sorte que la longueur circonférentielle du matériau de revêtement est égale à ou légèrement plus petite que celle de la portion du système de canalisations du diamètre minimum.

2. Matériau de revêtement selon la revendication 1, où le matériau de revêtement tubulaire (4) est sélectionné parmi des matériaux tubulaires semblables à une étoffe et semblables à un filet.

3. Matériau de revêtement selon la revendication 1 ou la revendication 2, où le matériau de recouvrement tubulaire (4) est un matériau d'un type d'étoffe revêtu au moins sur une surface extérieure de celui-ci d'un film étanche à l'eau.

4. Procédé pour équiper un système de canalisations d'un revêtement renforcé par des fibres d'étoffe, qui comprend les étapes consistant à sélectionner un matériau de revêtement selon l'une des revendications 1 à 3, avec un matériau de recouvrement tubulaire (4) et une feuille (3) appropriés aux longueurs circonférentielles dudit système de canalisations ; placer le matériau de revêtement dans le système et introduire un fluide sous pression dans celui-ci, par quoi les portions chevauchées (5) de la feuille (3) sont amenées à glisser tout en gardant une forme tubulaire de la feuille ; et ensuite chauffer le matériau de revêtement afin de polymériser la résine thermodurcissable dans la feuille pour former un revêtement plastique, lié intégralement, renforcé par des fibres d'étoffe, sur la surface interne du système de canalisations.
